# EUROPÄISCHE PATENTSCHRIFT

(11) **EP 0 785 238 B1**
(45) Veröffentlichungstag und Bekanntmachung des Hinweises auf die Patenterteilung: **05.12.2001**
(21) Anmeldenummer: 97100179.7
(22) Anmeldetag: 08.01.1997
(51) Int. Cl.: C09C 1/24, C09C 3/06, D21H 17/67, D21H 19/38, A24D 3/18

(54) **Eisenoxid-Gelbpigmente mit Silicium-dioxidbeschichtung**
Yellow iron oxide pigments coated with silicon dioxide
Pigments jaunes d'oxyde de fer revêtus de dioxyde de silicium

(30) Priorität: 19.01.1996 DE 19601751
(43) Veröffentlichungstag der Anmeldung: 23.07.1997
(73) Patentinhaber: BASF AKTIENGESELLSCHAFT, 67056 Ludwigshafen (DE)
(72) Erfinder: Dunkelmann, Günter, Dr., 51375 Leverkusen (DE); Schäfer, Thomas, Dr., 51067 Köln (DE); Vamvakaris, Christos, Dr., 67169 Kallstadt (DE); Beck, Karin Heidrun, Dr., 67067 Ludwigshafen (DE)

(56) Entgegenhaltungen:
- WO-A-93/22386
- GB-A- 2 042 574
- GB-A- 2 048 923
- DATABASE WPI Week 7904 Derwent Publications Ltd., London, GB; AN 79-06740b XP002028300 & JP 53 142 399 A (SANYO SHIKISO) , 12.Dezember 1978
- PATENT ABSTRACTS OF JAPAN vol. 6, no. 131 (C-114), 17.Juli 1982 & JP 57 057755 A (TOYO SODA MFG.), 7.April 1982,
- DATABASE WPI Week 8742 Derwent Publications Ltd., London, GB; AN 87-296884 XP002028301 & RO 91 328 A (COMB. PROD. SODICE UND CENT. CHIM. TIMISOARA) , 30.März 1987
- DATABASE WPI Week 9533 Derwent Publications Ltd., London, GB; AN 95-252436 XP002028302 & JP 07 157 685 A (TODA KOGYO K.K.) , 20.Juni 1995
- DATABASE WPI Week 9329 Derwent Publications Ltd., London, GB; AN 93-233324 XP002028303 & RO 103 141 A (LETEA COMB. CELULOZA HIRTIE) , 25.Mai 1992
- DATABASE WPI Week 8644 Derwent Publications Ltd., London, GB; AN 86-290647 XP002028304 & SU 1 217 965 A (CELLULOSE PAPER IND. RES.) , 15.März 1986

## Beschreibung

Die vorliegende Erfindung betrifft die Verwendung von Eisenoxid-Gelbpigmenten mit Siliciumdioxidbeschichtung zum Einfärben von Zigarettenmundstückpapieren.

Eisenoxid-Gelbpigmente (FeOOH · x H₂O, x: 0 bis 7; C.I. Pigment Yellow 42, C.I. 77492; insbesondere Goethit α-FeOOH) werden zum Einfärben der unterschiedlichsten Materialien eingesetzt, z.B. auch zum Einfärben des Papiers für Zigarettenmundstücke. Dabei besteht das Problem, daß die Eisenoxid-Gelbpigmente eine unzureichende Glimmhemmung aufweisen.

Aus der US-A-4 187 862 ist ein Verfahren zur Verminderung der Feuergefährlichkeit und der Brennbarkeit von Zigaretten bekannt, bei dem die die Tabakfüllung umschließende, weiße und nur bis an das Filtermundstück reichende Papierhülle in aufwendiger Weise ganz oder nur in bestimmten, geometrisch angeordneten Bereichen, z.B. Linien, mit Wasserglas getränkt wird. Dieses Verfahren ist jedoch aufwendig und erfordert größere Wasserglasmengen.

Aus der SU-A-1 217 965 und der RO-A-103 141 ist die Verwendung von unbeschichteten Eisenoxid-Gelbpigmenten in Papieren für Holz imitate bekannt.

Der Erfindung lag die Aufgabe zugrunde, die Glimmhemmung von Papieren für Zigarettenmundstücke zu verbessern.

Demgemäß wurde die Verwendung von Eisenoxid-Gelbpigmenten (insbesondere Goethit), welche eine Siliciumdioxidbeschichtung aufweisen, zum Einfärben von Zigarettenmundstückpapieren gefunden.

Außerdem wurden Zigarettenmundstückpapieren, die mit SiO₂-beschichteten Eisenoxid-Gelbpigmenten eingefärbt sind, gefunden.

SiO₂-beschichtete Eisenoxid-Gelbpigmente sind aus den GB-A-2 042 574, GB-A-2 048 923, JP-A-142 399/1978, JP-A-57 755/1982 und RO-A-85/118 188 bekannt.

In der Regel enthalten die erfindungsgemäß verwendeten Eisenoxid-Gelbpigmente 0,5 bis 20 Gew.-%, bevorzugt 1 bis 10 Gew.-%, besonders bevorzugt 1 bis 5 Gew.-%, Siliciumdioxid, jeweils bezogen auf das beschichtete Pigment.

Die erfindungsgemäß verwendeten Pigmente können vorteilhaft durch Wasserglasbelegung erhalten werden.

Hierbei wird zunächst eine wäßrige Suspension der zu beschichtenden Pigmente hergestellt, die mit einer anorganischen Säure wie Schwefelsäure auf einen pH-Wert von üblicherweise 3 bis 5, bevorzugt 3,5 bis 4,5, eingestellt wird.

Vorteilhaft kann man auch direkt die bei der Synthese der Eisenoxid-Gelbpigmente durch Fällen von Eisen(II)hydroxid aus Eisen(II)salzlösungen mittels einer Base und anschließende Oxidation (Ullmann's Encyclopedia of Industrial Chemistry, Fifth Edition, Vol. A 20 (1992), Seite 358) anfallenden wäßrigen Suspensionen einsetzen, die in der Regel bereits einen pH-Wert im Bereich von 2,7 bis 4,5 aufweisen und üblicherweise 50 bis 60 g Eisenoxid-Gelbpigment enthalten.

Die Suspension wird dann in der Wärme (im allgemeinen bei 50 bis 90°C, vor allem bei 60 bis 75°C) vorzugsweise kontinuierlich mit einer wäßrigen Alkaliwasserglaslösung versetzt.

Bevorzugt wird hierbei eine Natronwasserglaslösung verwendet, die in der Regel 26 bis 28,5, insbesondere etwa 27,5 Gew.-% SiO₂ und 7,5 bis 8,8, insbesondere etwa 8,0 Gew.-% Na₂O enthält.

Bei Verwendung von bei der FeOOH-Synthese anfallenden Suspensionen kann gleichzeitig mit der Auffällung von Siliciumdioxid auf die Eisenoxid-Gelbpigmentteilchen auch eventuell noch nicht umgesetztes Eisen(II)salz durch Zugabe von Base und Luftzufuhr als FeOOH auf die bereits vorliegenden Pigmentteilchen aufgefällt werden. Der pH-Wert der Suspension beträgt in diesem Fall nach der Fällung im allgemeinen etwa 6 bis 7, vorzugsweise um 6,5. Wird das in der Suspension vorliegende Eisen(II) nicht ausgefällt, so beträgt der pH-Wert in der Regel 4 bis 4,5.

Enthält die Suspension kein zusätzliches Eisen(II) (die Suspension wurde also z.B. durch Suspendieren eines zuvor isolierten Eisenoxid-Gelbpigmentes in wäßriger Phase hergestellt), wird Wasserglas vorzugsweise im Überschuß zugegeben, so daß nach der Beschichtung ein pH-Wert von im allgemeinen 10 bis 11 vorliegt, der durch Zugabe von Säure anschließend wieder auf in der Regel 3 bis 4 erniedrigt wird.

Die Eisenoxid-Gelbpigmente können nach der Beschichtung in üblicher Weise durch Filtration, Waschen mit Wasser und Trocknen isoliert werden.

Zweckmäßigerweise wird noch ein Desagglomerierungsschritt, z.B. eine Mahlung in einer Labormühle oder in einer Querstrommühle, angeschlossen, um Pigmentteilchen der für die Anwendung geeigneten Teilchengröße zu erhalten.

Die SiO₂-beschichteten Eisenoxid-Gelbpigmente eignen sich hervorragend zur Einfärbung von Zigarettenmundstückpapieren, wobei insbesondere in Masse gefärbt wird, aber auch durch Bedrucken oder Tauchen (vorzugsweise in Gegenwart von Dispergierhilfsmitteln auf der Basis von Umsetzungsprodukten von Ethylenoxid und Ricinusöl in einem Molverhältnis von bevorzugt 10:1 bis 40:1, besonders bevorzugt 35:1) gefärbt werden kann. Die SiO₂-beschichteten Eisenoxid-Gelbpigmente weisen bei unverminderter Brillanz eine deutlich verbesserte Glimmhemmung auf.

### Beispiele

### A) Herstellung von SiO₂-beschichteten Eisenoxid-Gelbpigmenten

### Beispiel 1A

Eine auf 65°C erhitzte Suspension von 20 g hochreinem Eisenoxid-Gelbpigment (Goethit) in 180 g Wasser wurde durch Zugabe von 0,4 g 10 gew.-%iger Schwefelsäure auf einen pH-Wert von 3,8 eingestellt. Dann wurden unter Rühren 5 g Natronwasserglaslösung (SiO₂-Gehalt 26,5 Gew.-%) zugegeben, wobei sich ein pH-Wert von 10,7 einstellte. Anschließend wurde durch Zugabe von 10 gew.-%iger Schwefelsäure ein pH-Wert von 3 eingestellt.

Nach weiterem 15minütigem Rühren wurde das SiO₂-beschichtete Eisenoxid-Gelbpigment abfiltriert, mit Wasser gewaschen, getrocknet und gemahlen.

Das erhaltene Pigment hatte einen SiO₂-Gehalt von 3,7 Gew.-%.

### Beispiel 2A

Die SiO₂-Beschichtung wurde analog Beispiel 1A unter Verwendung von 10 g Natronwasserglaslösung durchgeführt.

Das erhaltene Pigment hatte einen SiO₂-Gehalt von 7,0 Gew.-%.

### Beispiel 3A

Die SiO₂-Beschichtung wurde analog Beispiel 1A unter Verwendung von 20 g Natronwasserglaslösung durchgeführt.

Das erhaltene Pigment hatte einen SiO₂-Gehalt von 17,3 Gew.-%.

### Beispiel 4A

Zu 7 1 einer bei der Synthese von Eisenoxid-Gelbpigment anfallenden wäßrigen Suspension, die 56 g/l chemisch hochreines Eisenoxid-Gelbpigment (Goethit), 21 g/l Eisen(II)sulfatheptahydrat und 66 g/l Natriumsulfat enthielt und einen pH-Wert von 3,2 aufwies, wurden nach Erhitzen auf 75°C unter Rühren und Luftzufuhr (800 l/h) 14,5 g Natronwasserglaslösung (SiO₂-Gehalt 27 Gew.-%) gegeben. Anschließend wurde unter fortgesetztem Rühren und weiterer Luftzufuhr so lange 15 gew.-%ige Natronlauge zudosiert (Einlaufgeschwindigkeit 0,2 l/h), bis ein pH-Wert von 6,5 erreicht war.

Das SiO₂-beschichtete Eisenoxid-Gelbpigment wurde abfiltriert, mit Wasser gewaschen, getrocknet und gemahlen. Das erhaltene Pigment hatte einen SiO₂-Gehalt von 0,6 Gew.-%.

### Beispiel 5A

Die SiO₂-Beschichtung wurde analog Beispiel 4A durchgeführt, jedoch wurden 7 1 einer Suspension, die 55,6 g/l chemisch hochreines Eisenoxid-Gelbpigment, 13,8 g/l Eisen(II)sulfatheptahydrat und 88,9 g/l Natriumsulfat enthielt und einen pH-Wert von 3,1 aufwies, mit 28,8 g Natronwasserglaslösung versetzt.

Das erhaltene Pigment hatte einen SiO₂-Gehalt von 1,3 Gew.-%.

### B) Prüfung der glimmhemmenden Wirkung der SiO₂-beschichteten Eisenoxid-Gelbpigmente

### a) Tauchfärbung des Papiers

### Beispiele 1Ba) bis 5Ba)

Jeweils 2 g der in A) erhaltenen SiO₂-beschichteten Eisenoxid-Gelbpigmente wurden bei 80°C in 4 g eines Dispergierhilfsmittels auf der Basis eines Umsetzungsproduktes von Ethylenoxid und Ricinusöl im Molverhältnis 35:1 eingerührt.

4 g der hierbei erhaltenen Mischung wurden anschließend in 100 g Ethanol (96 gew.-%ig) eingerührt. Dann wurde Streichrohpapier durch die erhaltene Dispersion gezogen und an der Luft getrocknet.

Zur Prüfung der Glimmhemmung wurde das getrocknete gefärbte Papier durch Glut zum Glimmen gebracht. Dann wurde beobachtet, ob das Glimmen von selbst erlosch oder durch Abdecken gelöscht werden mußte. Nach Erlöschen wurde die Größe des Glimmloches beurteilt.

Alle mit erfindungsgemäßen SiO₂-beschichteten Eisenoxid-Gelbpigmenten gefärbten Papiere zeigten gute Glimmhemmung und erloschen von selbst.

Ein zum Vergleich mit unbehandeltem Eisenoxid-Gelbpigment gefärbtes Papier zeigte dagegen keine Selbstlöschung. Nachdem das Glimmloch einen Durchmesser von etwa 7 cm erreicht hatte, wurde durch Abdecken gelöscht.

Nähere Einzelheiten zu den erfindungsgemäßen Beispielen sind in der folgenden Tabelle zusammengestellt.

| Bsp. | Pigment aus Bsp. | Durchmesser des Glimmloches |
|---|---|---|
| 1Ba) | 1A | 1,0 cm |
| 2Ba) | 2A | 0,6 cm |
| 3Ba) | 3A | 0,4 cm |
| 4Ba) | 4A | 2,0 cm |
| 5Ba) | 5A | 1,0 cm |

### b) Massefärbung

### Beispiel 2Bb)

Das SiO₂-beschichtete Eisenoxid-Gelbpigment aus Beispiel 2A wurde direkt in die Papiermasse gegeben (3 %ige Pigmentierung).

Das erhaltene, gefärbte Papier wurde wie unter a) beschrieben auf die Glimmhemmung untersucht.

Das Glimmen erlosch von selbst, der Durchmesser des Glimmloches betrug ≤ 1 cm.

### c) Bedrucken des Papiers

### Beispiel 2Bc)

Mit dem SiO₂-beschichteten Eisenoxid-Gelbpigment aus Beispiel 2A wurde eine Druckfarbe hergestellt, mit der Papier bedruckt wurde.

Das bedruckte Papier wurde wie unter a) beschrieben auf die Glimmhhemmung untersucht.

Das Glimmen erlosch von selbst, der Durchmesser des Glimmloches betrug ≤ 1 cm.

## Patentansprüche

1. Verwendung von Eisenoxid-Gelbpigmenten mit Siliciumdioxidbeschichtung zum Einfärben von Zigarettenmundstückpapieren.

2. Verwendung nach Anspruch 1, **dadurch gekennzeichnet, daß** die Eisenoxid-Gelbpigmente 0,5 bis 20 Gew.-% Siliciumdioxid enthalten.

3. Zigarettenmundstückpapiere, die mit siliciumdioxidbeschichteten Eisenoxid-Gelbpigmenten eingefärbt sind.

## Claims

1. The use of a yellow iron oxide pigment with a silicon dioxide coating for coloring cigarette tip papers.

2. The use as claimed in claim 1, wherein the yellow iron oxide pigment contains from 0.5 to 20% by weight of silicon dioxide.

3. A cigarette tip paper which is colored with silicon dioxide-coated yellow iron oxide pigment.

## Revendications

1. Utilisation de pigments jaunes d'oxyde de fer, enduits de dioxyde de silicium, pour colorer dans la masse des papiers de manchette pour cigarettes.

2. Utilisation selon la revendication 1, **caractérisée en ce que** les pigments jaunes d'oxyde de fer contiennent de 0,5 à 20 % en poids de dioxyde de silicium.

3. Papiers de manchette pour cigarettes, qui sont colorés dans la masse par des pigments jaunes d'oxyde de fer enduits de dioxyde de silicium.
